# EUROPÄISCHE PATENTANMELDUNG

(11) **EP 2 410 219 A1**
(43) Veröffentlichungstag der Anmeldung: **25.01.2012**
(21) Anmeldenummer: 10007629.8
(22) Anmeldetag: 22.07.2010
(51) Int. Cl.: F16K 17/12

(54) **Überdruckventil für eine Strömungsmaschine**

(71) Anmelder: SIEMENS AKTIENGESELLSCHAFT, 80333 München (DE)
(72) Erfinder: Bocska, Peter, 45481 Mülheim a.d. Ruhr (DE)

(57) **Zusammenfassung**

Die Erfindung betrifft ein Überdruckventil (1), umfassend einen Druckraum (2) und einen Deckel (4), der zum Abdichten des Druckraumes (2) abgebildet ist, wobei das Überdruckventil (1) Bohrungen (6) umfasst, die durch ein Heben des Deckels (4) entgegen der Gewichtskraft durch den in einem Druckraum (2) herrschenden Überdruck eine strömungstechnische Verbindung herstellt zwischen im Überdruckventil (1) befindlichen Druckraum (2) und einem Außenraum (5), der außerhalb des Überdruckventils (1) liegt und somit eine Strömung von im Druckraum (2) befindlichen Gases, Dampfes oder Ähnlichem in den Außenraum (5) ermöglicht.

## Beschreibung

Die Erfindung betrifft ein Überdruckventil umfassend einen Druckraum und einen Deckel, der zum Abdichten des Druckraumes ausgebildet ist.

Sicherheitsventile werden dazu verwendet, um druckbeaufschlagte Räume oder Druckbehälter vor einem unzulässigen Druckanstieg zu schützen. Solche Sicherheitsventile leiten im Falle einer Überschreitung eines Grenzdruckes das in einem Druckraum befindliche Fluid in die Atmosphäre oder andere Sicherheitsdruckräume ab.

Im Strömungsmaschinenbau muss beispielsweise jeder Dampfkessel mit einem Sicherheitsventil ausgerüstet sein. Ein Sicherheitsventil kann ebenso als Druckentlastungseinrichtung bezeichnet werden. Neben den Sicherheitsventilen sind noch weitere Druckentlastungseinrichtungen, wie z.B. Berstscheiben, bekannt.

Mit Berstscheiben ist es möglich, einen Behälter oder ein System vor schädigendem Über- oder Unterdruck zu schützen. Dies geschieht dadurch, dass eine als Membran ausgebildete Berstscheibe zerbirst und dadurch eine strömungstechnische Verbindung zwischen einem Druckraum und einem Außenraum entsteht. Sofern die Membran einmal zerstört wurde, kann diese nicht wieder geschlossen werden. Eine als Berstscheibe ausgebildete Druckentlastungseinrichtung müsste demnach, sofern ein Überdruck oder Unterdruck entstanden ist und die Berstscheibe geborsten ist, durch eine neue Berstscheibe ersetzt werden. Dies ist zeitaufwändig und vergleichsweise teuer. Außerdem muss eine Anlage entweder stillgelegt oder durch Bypassleitungen derart geändert werden, dass das Austauschen der Berstscheibe nicht zu Verzögerungen in dem Betrieb der Anlage führt.

Es wäre von Vorteil, hier eine Druckentlastungseinrichtung zu haben, die nach einem Drucksicherungsfall in kurzer Zeit wieder einsetzbar ist.
An dieser Stelle setzt die Erfindung an.

Es ist Aufgabe der Erfindung eine Druckentlastungseinrichtung in Form eines Überdruckventils anzugeben, das nach einem Überdruckfall schnell wieder eingesetzt werden kann.

Diese Aufgabe wird gelöst durch ein Überdruckventil umfassend einen Druckraum und einen Deckel, der zum Abdichten des Druckraumes ausgebildet ist, wobei der Deckel eine Abdichtposition und eine Überdruckposition einnehmen kann, wobei in der Abdichtposition der Deckel den Druckraum abdichtet und in der Überdruckposition eine strömungstechnische Verbindung zwischen dem Druckraum und einem Außenraum ausgebildet ist.

Ein wesentliches Merkmal der Erfindung ist es, einen Deckel einzusetzen, der einen Druckraum abdichtet. Ein im Druckraum befindliches Gas, Dampf oder Fluid wird durch den Deckel gewissermaßen zurückgehalten und gelangt nicht in den Außenraum. Im Einsatzfall, das bedeutet, sobald im Druckraum der Druck einen Grenzwert überschreitet, gelangt der Deckel von der Abdichtposition in eine Überdruckposition. Das Überdruckventil ist dabei derart ausgebildet, dass dann eine strömungstechnische Verbindung zwischen dem Druckraum und einem Außenraum entsteht. Dies kann dadurch erfolgen, dass der Deckel angehoben wird und ein Spalt entsteht, durch den der Überdruck in den Außenraum abgeleitet werden kann.

In den Unteransprüchen sind vorteilhafte Weiterbildungen angegeben.

So ist es vorteilhaft, wenn der Deckel in Richtung der Gewichtskraft beweglich ausgebildet ist. Dadurch kann über die Masse des Deckels und der Fläche des Deckels eingestellt werden, ab welchem Grenzdruckwert der Deckel sich gegen die Gewichtskraft anheben lässt. Ein vergleichsweise hoher Druck im Druckraum erfordert demnach ein vergleichsweise hohes Gewicht des Deckels. Die Masse des Deckels und die Fläche des Deckels sollte vorher in Abhängigkeit des zu erwartenden Grenzdruckwertes bestimmt werden. Der Grenzdruckwert ist derjenige Grenzwert, der, sofern er überschritten wird, ein Auslösen des Überdruckventils zur Folge hat.

In einer weiteren vorteilhaften Weiterbildung umfasst der Deckel Öffnungen, die in der Abdichtposition verdeckt sind und in der Überdruckposition die strömungstechnische Verbindung zwischen dem Druckraum und dem Außenraum herstellen. Im einfachsten Fall können diese Öffnungen Bohrungen umfassen, die in der Abdichtposition verdeckt sind. Nach einem Anheben des Deckels werden diese Bohrungen freigelegt und dadurch ein Ausströmen des im Druckraum befindlichen Gases, Dampfes oder Fluides ermöglicht. Neben den Bohrungen sind auch andere Ausführungsformen möglich. So könnte beispielsweise eine viereckige Öffnung oder mehreckige Öffnung oder auch dreieckige Öffnungen die erfindungsgemäße Funktion erfüllen.

In einer weiteren vorteilhaften Weiterbildung umfasst das Überdruckventil eine Druckwand, die den Druckraum einschließt, wobei der Deckel eine Deckelwand umfasst, wobei die Öffnungen in der Deckelwand angeordnet sind, wobei in der Abdichtposition die Öffnungen in der Deckelwand durch die Druckwand verdeckt sind. Die Deckelwand ist somit vor der Druckwand angeordnet. Erfindungsgemäß lässt sich die Deckelwand gegen die Druckwand verschieben. Da in der Deckelwand die Öffnungen enthalten sind, wird durch ein Verschieben der Deckelwand gegen die Druckwand nach und nach die Querschnittsfläche der Öffnungen vergrößert und somit die Möglichkeit geschaffen, eine Verbindung zwischen dem Druckraum und dem Außenraum zu ermöglichen. Im einfachsten Fall kann die Druckwand und die Deckelwand als Zylinder ausgeführt sein, wobei der Radius der Deckelwand sich von dem Radius der Druckwand derart unterscheidet, dass die beiden Zylinder gegeneinander verschiebbar angeordnet sind.

In einer weiteren vorteilhaften Weiterbildung sind die Druckwand und die Deckelwand im Betriebszustand im Wesentlichen parallel zur Richtung der Gewichtskraft ausgebildet. Eine schräg zur Gewichtskraft angeordnete Deckelwand und Druckwand würde zu Reibkräften zwischen der Druckwand und Deckelwand führen. Eine zur Gewichtskraft parallel angeordnete Ausrichtung der Deckelwand und der Druckwand führt zu einem nahezu reibungsfreien Bewegen der Druckwand gegenüber der Deckelwand. Eine schnelle Reaktionszeit des Überdruckventils ist dadurch möglich.

Vorteilhafterweise weist der Deckel Begrenzungsmittel auf, die ein Verschieben des Deckels in Richtung der Gewichtskraft begrenzen. Im Betriebsfalle, d.h. im Falle eines schnell auftretenden Überdruckes im Druckraum, bewegt sich der Deckel vergleichsweise schnell gegenüber der Druckwand. Diese Bewegung muss durch geeignete Begrenzungsmittel begrenzt werden. In einer vorteilhaften erfindungsgemäßen Weiterbildung umfasst das Begrenzungsmittel einen Vorsprung in der Deckelwand und einen Gegenvorsprung in der Seitenwand, wobei der Vorsprung und der Gegenvorsprung in der Überdruckposition aneinander und ein weiteres Bewegen des Deckels in der Gegenrichtung der Gewichtskraft verhindert. Das bedeutet, dass eine Bewegung des Deckels mit der Deckelwand dadurch gestoppt wird, dass der in der Deckelwand angeordnete Vorsprung gegen den in der Seitenwand angeordneten Gegenvorsprung stößt und ein weiteres Bewegen des Deckels verhindert. Der Vorsprung und der Gegenvorsprung müssen entsprechend dimensioniert sein. Bei entsprechend hohen Drücken im Druckraum müsste der Vorsprung entsprechend groß dimensioniert sein.

Vorteilhafterweise ist das Überdruckventil im Wesentlichen rotationssymmetrisch ausgebildet. Das Überdruckventil würde somit zwei ineinander angeordneten Rohrabschnitten ähneln, wobei ein Rohrabschnitt den Deckel umfasst. Ein rotationssymmetrisch ausgebildetes Überdruckventil lässt sich vergleichsweise einfach herstellen und vergleichsweise einfach mit einem Druckraum verbinden.

Vorteilhafterweise ist der Deckel bei einem Betriebsdruck p_{Betrieb} in der Abdichtposition und bei einem Überdruck p_{über} in der Überdruckposition, wobei p_{über} > p_{Betrieb} gilt und das Gewicht des Deckels und/oder die Fläche des Deckels derart dimensioniert sind, dass im Fall p_{über} > p_{Betrieb} der Deckel von der Abdichtposition in die Überdruckposition sich bewegt.

In einer weiteren vorteilhaften Weiterbildung sind die Öffnungen in Umfangsrichtung verteilt. Ein gleichmäßiges Verteilen der Öffnungen in der Deckelwand führt zu einer gleichmäßigen Kraftverteilung im Überdruckventil. Neben der Anordnung der Öffnungen im Deckel bzw. in der Deckelwand können die Öffnungen auch in der Druckwand angeordnet werden. Wichtig ist hierbei, dass die Öffnungen im Betriebszustand, also bei dem p_{über} < p_{Betrieb} ist, geschlossen sind.

Die Erfindung wird anhand eines Ausführungsbeispiels näher erläutert. Bauteile mit dem gleichen Bezugszeichen haben im Wesentlichen dieselbe Funktionsweise.

Es zeigen:
- FIG 1: eine perspektivische, teilweise in Schnittdarstellung dargestellte Ansicht eines Überdruckventils,
- FIG 2: eine weitere perspektivische Darstellung des Überdruckventils
- FIG 3: eine perspektivische Darstellung des Deckels;
- FIG 4: eine Querschnittsansicht des Sicherheitsventils im Betriebszustand,
- FIG 5: eine Querschnittsansicht des Überdruckventils im Auslösezustand,
- FIG 6: eine Querschnittsansicht eines Details aus FIG 4,
- FIG 7: alternative Ausführungsform.

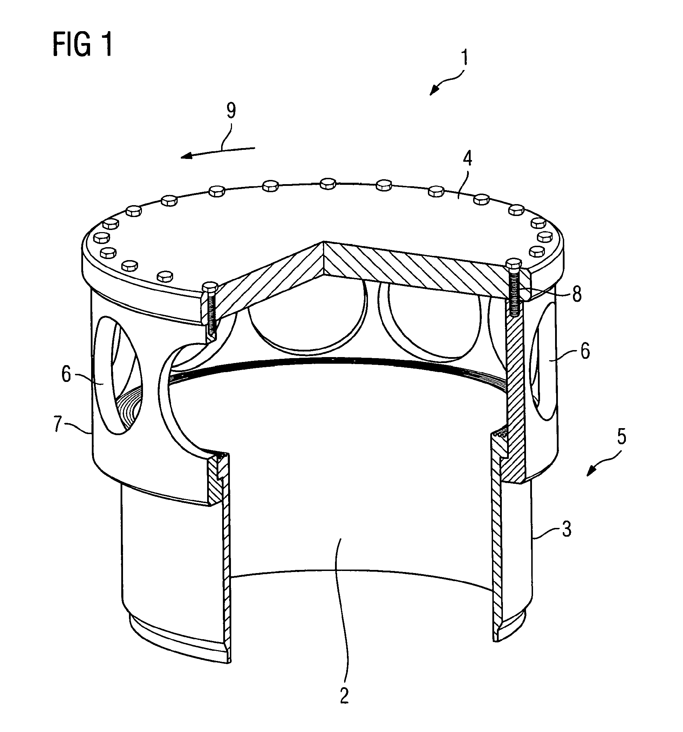

Die FIG 1 zeigt eine perspektivische zum Teil in Schnittdarstellung dargestellte Ansicht eines Überdruckventils 1. Das Überdruckventil 1 zeichnet sich durch einen Druckraum 2 aus, der durch eine Druckwand 3 begrenzt ist. Die in der FIG 1 dargestellte Position des Überdruckventils 1 stellt bereits die Auslöseposition dar.

Des Weiteren umfasst das Überdruckventil 1 einen Deckel 4, der zum Abdichten des Druckraums 2 ausgebildet ist. In FIG 1 ist der Deckel 4 in einer Überdruckposition dargestellt, d. h. dass in dieser Überdruckposition eine strömungstechnische Verbindung zwischen dem Druckraum 2 und einem Außenraum 5 ausgebildet ist. Die strömungstechnischen Verbindungen sind in dem in FIG 1 dargestellten Ausführungsbeispiel durch Bohrungen 6 realisiert, die in einer Deckelwand 7 des Deckels 4 angeordnet sind. Die Deckelwand 7 weist einen geringfügig größeren Radius als die Druckwand 3 auf, die beide im Wesentlichen rotationssymmetrisch ausgebildet sind. Die Bohrungen 6 könnten genauso gut in einem oberen Bereich der Druckwand 3 angeordnet sein. Wichtig ist hier, dass in einer Abdichtposition, die in der FIG 1 nicht dargestellt ist, die Bohrungen verdeckt sind. Dabei ist es unwesentlich, ob der Deckel 4 mit der Deckelwand 7 in der Druckwand 3 angeordnete Bohrungen 6 abdichtet oder die Druckwand 3 in der Deckelwand 7 angeordnete Bohrungen 6 abdichtet. Die Deckelwand 7 wird über geeignete Befestigungsmittel mit dem Deckel 4 verbunden. Beispielsweise können hier Schrauben 8 verwendet werden. In dem in FIG 1 dargestellten Ausführungsbeispiel ist lediglich eine Schraube mit dem Bezugszeichen 8 versehen. Die Schrauben 8 werden in Umfangsrichtung 9 angeordnet, so dass eine gleichmäßige Verteilung der Schrauben 8 in Umfangsrichtung erfolgt. Des Weiteren werden mehrere Bohrungen 6 in Umfangsrichtung verteilt. Auch hier sollten die Bohrungen 6 in gleichmäßigen Abständen zueinander angeordnet werden. Zudem sollten die Bohrungen 6 derart groß sein, dass ein im Druckraum 2 befindlicher Dampf, Gas oder Fluid oder ähnliches schnell in der Überdruckposition in den Druckraum 2 in den Außenraum 5 ausströmen kann. Der Deckel 4 wird über die Gewichtskraft in der Abdichtposition gehalten. Das bedeutet, dass die Masse der bewegenden Teile, die mit der Größe des Deckels 4 zusammenhängt und die Fläche des Deckels 4 entsprechend bemessen sein müssen, dass durch die Gewichtskraft und dem im Druckraum 2 befindlichen Druck das Überdruckventil geschlossen bleibt.

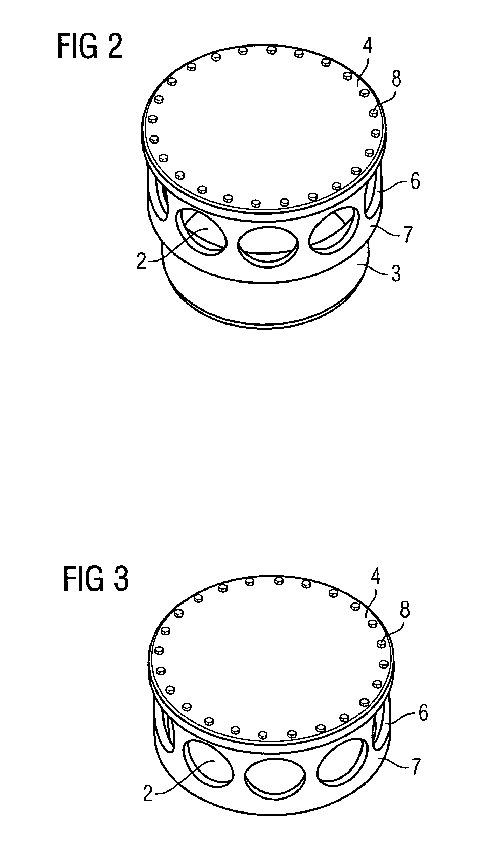

In FIG 2 ist das Überdruckventil in perspektivischer Ansicht in der Überdruckposition und in der FIG 3 ist eine perspektivische Ansicht des Überdruckventils in der Abdichtposition dargestellt.

In der FIG 2 ist deutlich zu erkennen, dass die Öffnungen nunmehr eine strömungstechnische Verbindung zwischen dem Druckraum 2 und dem Außenraum 5 ermöglichen. Dadurch ist ein schnelles Entlasten des Druckraumes 2 mit einem Überdruck möglich. Die FIG 3 zeigt deutlich, dass der Deckel 4 infolge der Gewichtskraft in der Abdichtposition liegt und die Druckwand 3 die Bohrungen 6 abdichtet. Ein Strömen des im Druckraum 2 befindlichen Gases, Dampfes oder Ähnlichem in den Außenraum 5 ist dadurch nicht möglich. Das Überdruckventil 1 ist in dieser Position geschlossen.

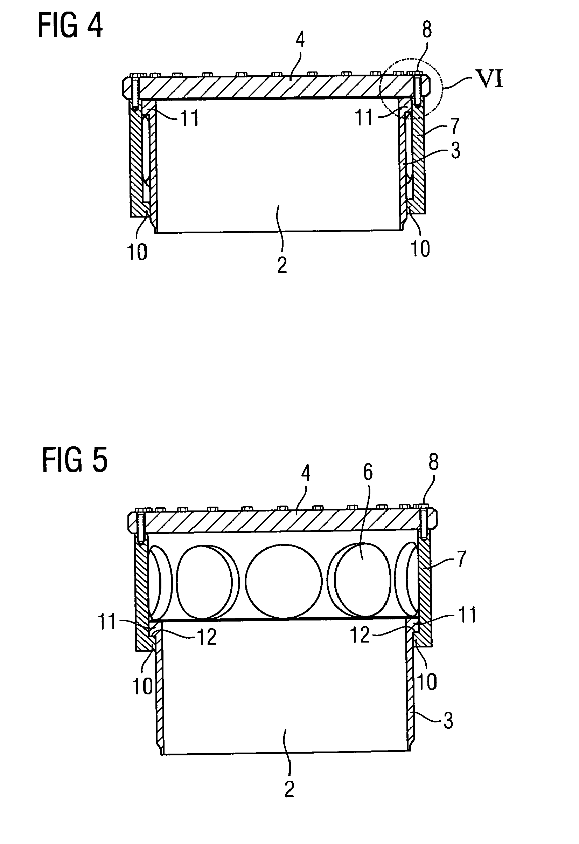

Die FIG 4 und die FIG 5 zeigen jeweils eine Querschnittsansicht des Überdruckventils 1 in der Abdichtposition (FIG 4) und in der Überdruckposition (FIG 5). Die Druckwand 3 und die Deckelwand 7 sind im Wesentlichen parallel zueinander ausgerichtet. Eine Bewegung des Deckels 4 entgegengesetzt der Gewichtskraft wird durch das Anbringen von einem Vorsprung 10 in der Deckelwand 7 und eines Gegenvorsprungs 11 in der Druckwand 3 begrenzt. Wie in FIG 5 zu sehen ist, liegt in der Überdruckposition der Vorsprung 10 am Gegenvorsprung 11 an.

Der Vorsprung 10 ist hierbei radial nach innen gerichtet und der Gegenvorsprung 11 radial nach außen, so dass an einer Berührungsfläche 12 die Bewegung des Deckels 4entgegen der Gewichtskraft und infolge des im Druckraum 2 befindlichen Überdrucks gestoppt wird.

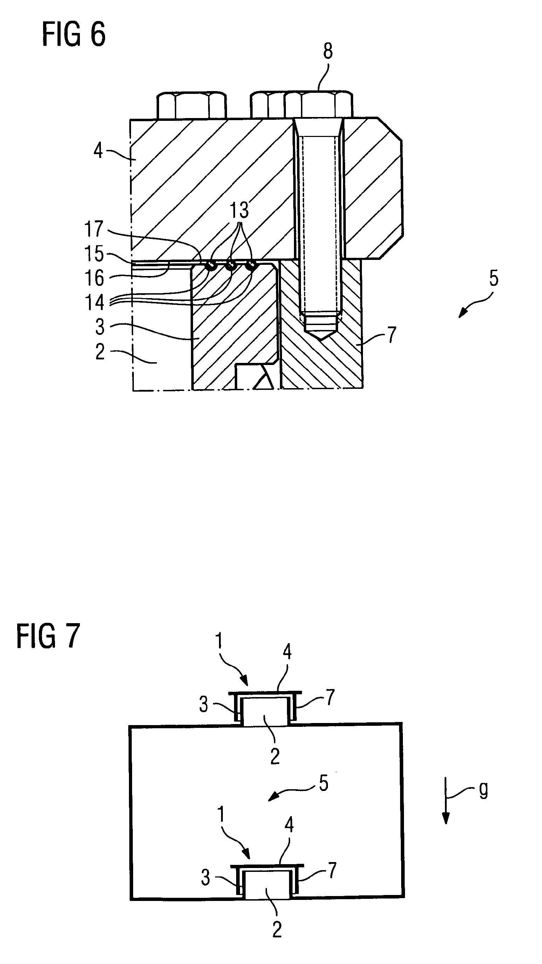

Die FIG 6 zeigt einen Ausschnitt VI der FIG 4. Wichtig ist hierbei, dass in der Abdichtposition ein Ausströmen des im Druckraum 2 befindlichen Gases, Dampfes oder Ähnlichem in den Außenraum 5 verhindert wird. Dafür werden an den Gegenvorsprung 11 Dichtungen 13 angebracht, die einen Spalt zwischen der Druckwand 3 und dem Deckel 4 ausbilden. Diese Dichtungen 13 können beispielsweise in einem oberen Teil der Druckwand 3 in angeordnete Nuten 14 eingelegte Gummidichtungen sein, die infolge der Gewichtskraft des Deckels 4 gegen die Nuten 14 gepresst werden. Dadurch wird ein Spalt 15 zwischen einer Unterseite 16 des Deckels 4 und einer Oberseite 17 der Druckwand 3 abgedichtet. Diese Nuten 14 sowie die Dichtungen 13 können in Umfangsrichtung rotationssymmetrisch angeordnet werden. Der im Druckraum 2 befindliche Druck p weist in der Abdichtposition einen Druck auf, der geringer ist als der Grenzwert p_{über}. Sobald der im Betrieb herrschende Betriebsdruck p_{Betrieb} kleiner ist als der Überdruck p_{über} befindet sich der Deckel 4 in der Abdichtposition. Der Deckelwechsel von der Abdichtposition in die Überdruckposition erfolgt, sobald der Betriebsdruck p_{Betrieb} einen Überdruck p übersteigt. Es gilt dann p_{Betrieb} > p_{über}. Der Deckel 4 wird dann entgegengesetzt der Gewichtskraft angehoben und eine strömungstechnische Verbindung über die Bohrungen 6 zwischen dem Druckraum 2 und dem Außenraum 5 ermöglicht.

Die Figur 7 zeigt eine alternative Ausführungsform des Überdruckventils 1 bei geänderten Druckbedingungen. Der Unterschied hierbei ist, dass der im Außenraum 5 herrschende Druck ein Unterdruck gegenüber dem Druckraum 2 ist. Dem mit dem Pfeil symbolisierte Gewichtskraft g ist derart ausgerichtet, dass die Schwerkraft des Deckels 4 auf die Druckwand 3 ausgerichtet ist. Sofern der Druck im Außenraum 5 geringer ist in Folge von Unterdruck, und der Druck im Druckraum 2 größer ist als der Druck im Außenraum 5, öffnet das Ventil 1. Es ist somit ein Auslösen des Ventils 1, nicht nur bei einem plötzlichen Überdruck im Druckraum 2 möglich, sondern auch bei einem plötzlichen Unterdruck im Außenraum 5. Die Einsatzmöglichkeiten solch eines Überdruckventils 1 kann somit um ein vielfaches vergrößert werden.

## Patentansprüche

1. Überdruckventil (1) umfassend einen Druckraum (2) und einen Deckel (4), der zum Abdichten des Druckraumes (2) ausgebildet ist, **dadurch gekennzeichnet, dass** der Deckel (4) eine Abdichtposition und ein Überdruckposition einnehmen kann,
wobei in der Abdichtposition der Deckel (4) den Druckraum (2) abdichtet und in der Überdruckposition eine strömungstechnische Verbindung zwischen dem Druckraum (2) und einem Außenraum (5) ausgebildet ist.

2. Überdruckventil (1) nach Anspruch 1,
wobei der Deckel (4) in Richtung der Gewichtskraft beweglich ausgebildet ist.

3. Überdruckventil (1) nach Anspruch 1 oder 2,
wobei der Deckel (4) Öffnungen umfasst, die in der Überdruckposition die strömungstechnische Verbindung zwischen dem Druckraum (2) und dem Außenraum (5) herstellt.

4. Überdruckventil (1) nach einem der vorhergehenden Ansprüche,
wobei das Überdruckventil (1) eine Druckwand (3) umfasst, die den Druckraum (2) einschließt und der Deckel (4) eine Deckelwand (7) umfasst,
wobei die Öffnungen in der Deckelwand (7) angeordnet sind, wobei in der Abdichtposition die Öffnungen in der Deckelwand (7) durch die Druckwand (3) verdeckt sind.

5. Überdruckventil (1) nach Anspruch 4,
wobei die Druckwand (3) und die Deckelwand (7) im Betriebszustand im Wesentlichen parallel zur Richtung der Gewichtskraft ausgebildet sind.

6. Überdruckventil (1) nach einem der Ansprüche 3 bis 5,
wobei die Öffnungen als Bohrungen (6) ausgeführt sind.

7. Überdruckventil (1) nach einem der Ansprüche 2 bis 6,
wobei der Deckel (4) Begrenzungsmittel aufweist, die ein Verschieben des Deckels (4) in Richtung der Gewichtskraft begrenzen.

8. Überdruckventil (1) nach Anspruch 7,
wobei das Begrenzungsmittel einen Vorsprung (10) in der Deckelwand (7) und einen Gegenvorsprung (11) in der Druckwand (3) umfasst,
wobei der Vorsprung und der Gegenvorsprung in der Überdruckposition aneinander angrenzen und ein weiteres Bewegen des Deckels (4) entgegen der Richtung der Gewichtskraft verhindert.

9. Überdruckventil (1) nach einem der vorhergehenden Ansprüche,
wobei das Überdruckventil (1) im Wesentlichen rotationssymmetrisch ausgebildet ist.

10. Überdruckventil (1) nach einem der vorhergehenden Ansprüche,
wobei das Gewicht des Deckels (4) und/oder die Fläche des Deckels (4) derart dimensioniert sind, dass bei einem Betriebsdruck p_{Betrieb} der Deckel (4) in der Abdichtposition und bei einem Überdruck p_{über} der Deckel (4) sich in der Überdruckposition befindet, wobei p_{über} < p_{Betrieb} gilt.

11. Überdruckventil (1) nach einem der Ansprüche 9 oder 10,
wobei die Öffnungen in Umfangsrichtung (9) verteilt sind.
